(19) Europäisches Patentamt
European Patent Office
Office européen des brevets

(11) Veröffentlichungsnummer: **0 494 152 B1**

(12) **EUROPÄISCHE PATENTSCHRIFT**

(45) Veröffentlichungstag der Patentschrift: **25.01.95**

(51) Int. Cl.[6]: **D21C 5/02**, C02F 9/00, C08F 8/32

(21) Anmeldenummer: **90912114.7**

(22) Anmeldetag: **22.08.90**

(86) Internationale Anmeldenummer:
**PCT/EP90/01397**

(87) Internationale Veröffentlichungsnummer:
**WO 91/03598 (21.03.91 91/07)**

# (54) VERWENDUNG VON MINDESTENS TEILWEISE WASSERLÖSLICHEN POLYMEREN ZUM ENTFERNEN VON DRUCKFARBEN AUS BEDRUCKTEN ALTPAPIEREN UND/ODER PAPIERKREISLAUFWÄSSERN.

(30) Priorität: **31.08.89 DE 3928841**

(43) Veröffentlichungstag der Anmeldung:
**15.07.92 Patentblatt 92/29**

(45) Bekanntmachung des Hinweises auf die Patenterteilung:
**25.01.95 Patentblatt 95/04**

(84) Benannte Vertragsstaaten:
**AT CH DE FR GB LI SE**

(56) Entgegenhaltungen:
**EP-A- 172 684**
**EP-A- 258 546**
**EP-A- 373 375**

(73) Patentinhaber: **Henkel Kommanditgesellschaft auf Aktien**

**D-40191 Düsseldorf (DE)**

(72) Erfinder: **FISCHER, Herbert**
**Am Nettchesfeld 14**
**D-4000 Düsseldorf 13 (DE)**
Erfinder: **HORNFECK, Klaus**
**August-Buberg-Strasse 34**
**D-4020 Mettmann (DE)**
Erfinder: **LIPHARD, Maria**
**Hülsebergstrasse 19**
**D-4300 Essen 14 (DE)**
Erfinder: **OBERKOBUSCH, Doris**
**Seidenweg 43**
**D-4000 Düsseldorf 13 (DE)**
Erfinder: **SCHIEFERSTEIN, Ludwig**
**Am Hang 15**
**D-4030 Ratingen 1 (DE)**
Erfinder: **TENHAEF, Rolf**
**Vennstrasse 41**
**D-4000 Düsseldorf 12 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft die Verwendung von mindestens teilweise wasserlöslichen Polymeren mit Gewichtsmitteln der Molekulargewichte zwischen 2 000 und 500 000, hergestellt durch Umsetzung von Carboxyl-, Ester-und/oder Anhydridgruppen enthaltenden Polymeren mit Aminoalkoholen und/oder Diaminen, zum Entfernen von Druckfarben aus bedruckten Altpapieren und/oder Papierkreislaufwässern.

Zur Herstellung von beispielsweise Zeitungsdruck- und Hygienepapieren werden heute in großen Mengen Altpapiere eingesetzt. Für diese Papiersorten bedeuten Helligkeit und Farbe bestimmte Qualitätsmerkmale. Um diese zu erreichen, müssen die Druckfarben aus den bedruckten Altpapieren entfernt werden. Üblicherweise geschieht dies mittels Deinking-Verfahren, die im wesentlichen in 2 Teilschritten ablaufen:

1. Aufschlagen der Altpapiere, d. h. Zerfasern in Wasser bei gleichzeitigem Einwirken der für die Ablösung der Druckfarbenteilchen benötigten Chemikalien und
2. Ausscheidung der abgelösten Druckfarbenteilchen aus den Papierstoffsuspensionen.

Der 2. Verfahrensschritt kann durch Auswaschen oder Flotation erfolgen (Ullmanns Encyclopädie der technischen Chemie, 4. Auflage, Band 17, Seiten 570 - 571 (1979)). Bei der Flotation, bei der die unterschiedliche Benetzbarkeit von Druckfarben und Papierfasern ausgenutzt wird, wird Luft durch die Papierstoffsuspensionen gedrückt oder gesaugt. Dabei verbinden sich kleine Luftbläschen mit den Druckfarbenteilchen und bilden an der Wasseroberfläche einen Schaum, der mit Stoffängern entfernt wird.

Üblicherweise wird das Deinken von Altpapieren bei alkalischen pH-Werten in Gegenwart von Alkalihydroxiden, Alkalisilikaten, oxidativ wirkenden Bleichmitteln und oberflächenaktiven Substanzen bei Temperaturen zwischen 30 und 50 °C durchgeführt. Als oberflächenaktive Substanzen, die das Ablösen und Trennen der Druckfarbenteilchen bewirken, werden häufig Seifen und/oder Fettalkoholpolyglykolether eingesetzt (Ullmanns Encyclopädie der technischen Chemie, 4. Auflage, Band 17, Seiten 571-572 (1979)).

Aus der europäischen Patentschrift EP-A-0 172 684 sind Copolymere von Acrylamid und Dimethyldiallylammoniumchlorid, deren Molekulargewichte vorzugsweise zwischen 2 000 000 und 10 000 000 liegen, bekannt, die zum Deinken von Cellulosematerial eingesetzt werden können. Die auf diese Weise behandelten Papiere besitzen jedoch sehr schlechte Weißgrade.

Die klassischen Druckfarbensysteme, beispielsweise auf Basis Nitrocellulose, Maleinatharze und/oder Schellack, die Ester und/oder Ketone, beispielsweise Ethylacetat und/oder Methylethylketon, oder Alkohole als Lösungsmittel enthalten, werden in den letzten Jahren aus Umweltschutzgründen in zunehmendem Maße durch wasserverdünnbare Druckfarben ersetzt. Ein weiterer Grund für die zunehmende Verwendung wasserverdünnbarer Druckfarben liegt in der Unbrennbarkeit von Wasser, wodurch in den Druckereien die bei Verwendung lösungsmittelhaltiger Druckfarben notwendige Installation aufwendiger Schutzeinrichtungen überflüssig wird. Die meisten wasserverdünnbaren Druckfarben enthalten als Bindemittel anionische Polymere, beispielsweise carboxylgruppenhaltige Polymere, durch deren Neutralisation mit Basen die Druckfarben wasserverdünnbar werden. Wasserverdünnbare Druckfarben haben jedoch den entscheidenden Nachteil, daß sie mit den üblichen in der Deinkingflotte enthaltenen Tensiden - wenn überhaupt - nur völlig unzureichend entfernt werden können (Wochenblatt für Papierfabrikation 13, 537-538 (1988)). Das hat zur Folge, daß bis heute die in immer größeren Mengen anfallenden Altpapiere, die mit wasserverdünnbaren Druckfarben bedruckt wurden, nicht wiederverwertet werden und somit auch nicht als Altpapierrohstoff für Zeitungsdruck- und Hygienepapiere zur Verfügung stehen.

Die Aufgabe der Erfindung bestand somit in der Entwicklung eines Deinking-Verfahrens, mit dem es möglich ist, Altpapiere zu deinken. Insbesondere sollte mit einem solchen Deinking-Verfahren die Möglichkeit gegeben sein, Altpapiere, die mit wasserverdünnbaren Druckfarben bedruckte Altpapierbestandteile enthalten, zu deinken.

Aus der deutschen Patentanmeldung DE-A-38 39 479 ist bereits bekannt, daß sich sowohl lösungsmittelhaltige als auch wasserverdünnbare Druckfarben in Gegenwart von mindestens teilsweise wasserlöslichen Polymeren und/oder Copolymeren mit Zahlenmittteln der Molekulargewichte zwischen 2 000 und 500 000 aus bedruckten Altpapieren entfernen lassen. Die Polymeren und/oder Copolymeren werden durch Polymerisation von aminogruppenhaltigen Monomeren, beispielsweise Dimethylaminoethylmethacrylat, oder durch Copolymerisation von aminogruppenhaltigen Monomeren mit ungesättigten Säuren, beispielsweise Acrylsäure und/oder Methacrylsäure, ungesättigten Carbonsäureestern, beispielsweise Ethylacrylat und/oder Methylmethacrylat, Amiden von Acrylsäure und/oder Methacrylsäure und/oder N-Vinylpyrrolidon, hergestellt. Überraschenderweise wurde gefunden, daß die bereits mit den in DE-A-38 39 479 beschriebenen Polymeren und/oder Copolymeren erzielten guten Deinking-Ergebnisse sowohl bei lösungsmittelhaltigen als auch bei wasserverdünnbaren Druckfarben erheblich verbessert werden, wenn mindestens teilweise wasserlösliche Polymere mit Gewichtsmitteln der Molekulargewichte zwischen 2 000 und 500 000 eingesetzt

werden, die durch Umsetzung von Carboxyl-, Ester-und/oder Anhydridgruppen enthaltenden Polymeren mit Aminoalkoholen und/oder Diaminen hergestellt werden. Darüberhinaus wurde gefunden, daß mit diesen Polymeren auch wasserverdünnbare und/oder lösungsmittelhaltige Druckfarben aus Papierkreislaufwässern entfernt werden können.

Gegenstand der Erfindung ist dementsprechend die Verwendung von mindestens teilweise wasserlöslichen Polymeren mit Gewichtsmitteln der Molekulargewichte zwischen 2 000 und 500 000, hergestellt durch Umsetzung von Polymeren, die Carboxylgruppen und/oder Estergruppen der allgemeinen Formel -COOR, in der R eine $C_{1-8}$-Alkylgruppe oder eine aromatische Gruppe bedeutet, und/oder -CO-O-CO-Gruppen enthalten,
mit, bezogen auf die in den Polymeren enthaltenen Carboxyl-, Ester- und/oder latenten Carboxylgruppen,

B1. 0 bis 1 Äquivalent Aminoalkoholen der allgemeinen Formel I

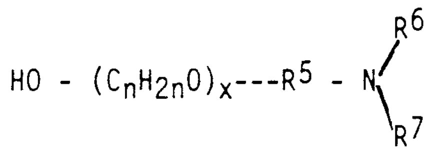

in der $R^5$ eine $C_{1-8}$-Alkylgruppe oder eine aromatische Gruppe, $R^6$ und $R^7$ gleich oder verschieden sind und $C_{1-4}$-Alkylgruppen oder aromatische Gruppen oder $R^6$ und $R^7$ zusammen $CH_2CH_2$-O-$CH_2CH_2$, n 2, 3 und/oder 4 und x eine Zahl zwischen 0 und 10 bedeuten,

B2. 0 bis 1 Äquivalent Diaminen der allgemeinen Formel II

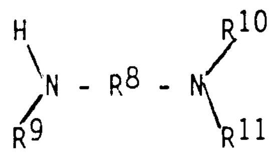

in der $R^8$ eine $C_{1-8}$-Alkylgruppe oder eine aromatische Gruppe, $R^9$ H oder eine $C_{1-4}$-Alkylgruppe und $R^{10}$ und $R^{11}$ gleich oder verschieden sind und $C_{1-4}$-Alkylgruppen oder $R^{10}$ und $R^{11}$ zusammen -CH = CH-N = CH- bedeuten,

B3. 0 bis 0,5 Äquivalenten Alkoholen der allgemeinen Formel III

$$HO - (C_mH_{2m}O)y---R^{12}$$

in der $R^{12}$ eine $C_{6-22}$-Alkylgruppe oder eine aromatische Gruppe, m 2, 3 und/oder 4 und y eine Zahl zwischen 0 und 30 bedeuten und

B4. 0 bis 0,5 Äquivalenten Aminen der allgemeinen Formel IV

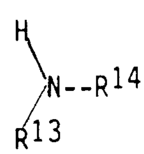

in der $R^{13}$ H oder eine $C_{1-4}$-Alkylgruppe und $R^{14}$ eine $C_{6-22}$-Alkylgruppe oder eine aromatische Gruppe bedeuten,
mit der Maßgabe, daß die Summe der Äquivalente der Komponenten B1 und B2 ungleich 0 ist,
zum Entfernen von Druckfarben aus bedruckten Altpapieren und/oder Papierkreislaufwässern.

Anhydridgruppen, die in den erfindungsgemäßen Polymeren enthalten sein können, enthalten pro Anhydridgruppe zwei latente Carboxylgruppen.

Vorzugsweise werden mindestens teilweise wasserlösliche Polymere mit Gewichtsmitteln der Molekulargewichte zwischen 5 000 und 300 000, besonders bevorzugt Polymere mit Gewichtsmitteln der Molekulargewichte zwischen 10 000 und 100 000 verwendet.

"Mindestens teilweise wasserlöslich" bedeutet, daß die Polymere beim Anwendungs-pH-Wert zu mehr als 0,01 Gew.-% in Wasser klar oder trübe löslich sind.

Bedruckte Altpapiere werden in Gegenwart von solchen mindestens teilweise wasserlöslichen Polymeren bevorzugt aufgeschlagen und Papierkreislaufwässer bevorzugt mit solchen mindestens teilweise wasserlöslichen Polymeren versetzt, die durch Umsetzung von carboxyl-, ester- und/oder anhydridgruppenhaltigen Polymeren mit, bezogen auf die in den Polymeren enthaltenen Carboxyl-, Ester- und/oder latenten Carboxylgruppen,

B1. 0 bis 1 Äquivalent Aminoalkoholen,

B2. 0 bis 1 Äquivalent Diaminen,

B3. 0 bis 0,2 Äquivalenten Alkoholen und

B4. 0 bis 0,2 Äquivalenten Aminen,

mit der Maßgabe, daß die Summe der Äquivalente der Komponenten B1 und B2 zwischen 0,7 und 1 liegt, hergestellt werden.

Carboxyl-, ester- und/oder anhydridgruppenhaltige Polymere enthalten vorzugsweise Struktureinheiten der allgemeinen Formeln

A1.

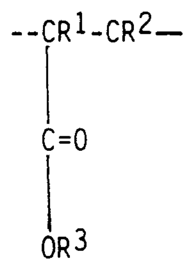

und/oder

A2.

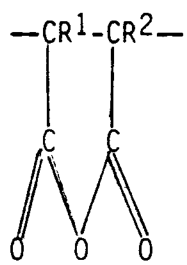

und/oder

A3.

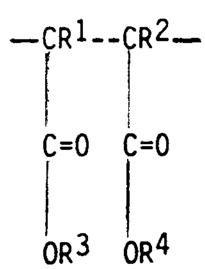

in denen $R^1$ und $R^2$ gleich oder verschieden sind und jeweils H oder eine Methylgruppe und $R^3$ und $R^4$ gleich oder verschieden sind und jeweils H, $C_{1-8}$-Alkylgruppen oder aromatische Gruppen bedeuten.

Polymere, die nur Struktureinheiten der allgemeinen Formel A1 enthalten, werden besonders bevorzugt.

Die zur Herstellung von erfindungsgemäß einzusetzenden Polymeren benötigten carboxyl-, ester- und/oder anhydridgruppenhaltigen Polymere lassen sich nach bekannten Polymerisationsverfahren in organischen Lösungsmitteln, wie Hexan, Octan, Toluol, Xylol und/oder Ketonen, herstellen. Als Monomere eignen sich beispielsweise Acrylsäure, Methacrylsäure, Crotonsäure, $C_{1-8}$-Alkylester der vorgenannten Säuren, Arylester der vorgenannten Säuren, Maleinsäureanhydrid, Maleinsäure, Fumarsäure, Mono-$C_{1-8}$-Alkylester der vorgenannten Säuren, Di-$C_{1-8}$-Alkylester der vorgenannten Säuren sowie die entsprechenden Arylester. Die Alkylgruppe der Alkoholreste in den Estern kann linear, verzweigtkettig oder cyclisch sein. Es kann ein Monomer oder ein Monomerengemisch eingesetzt werden. Acrylsäure, Methacrylsäure, Acrylsäureester und/oder Methacrylsäureester werden als Monomere bevorzugt. Als weitere Monomere können Styrol, Alkylstyrole, 4-Vinylpyridin, N-Vinyl-Pyrrolidon, Acrylnitril, Acrylamid, Methacrylamid, Vinylchlorid und/oder Vinylidenchlorid, eingesetzt werden. Die Polymerisationen werden in Gegenwart radikalbildender Substanzen, beispielsweise Dibenzoylperoxid und/oder Azobisisobutyronitril bei Temperaturen zwischen 60 und 150 °C unter Normaldruck durchgeführt.

Die Umsetzungen der carboxyl-, ester- und/oder anhydridgruppenhaltigen Polymeren mit Aminoalkoholen und/oder Diaminen und gegebenenfalls Alkoholen und/oder Aminen, werden mit oder ohne organische Lösungsmittel, vorzugsweise in Gegenwart von Katalysatoren, wie Schwefelsäure, p-Toluolsulfonsäure, Dibutylzinndilaurat, Zinn und/oder Alkalialkoholaten bei Temperaturen zwischen 100 und 230 °C durchgeführt. Das während der Veresterung und/oder Amidierung gebildete Wasser und/oder die gebildeten Alkohole werden destillativ entfernt. Als organische Lösungsmittel eignen sich beispielsweise aliphatische und/oder aromatische Kohlenwasserstoffe mit Siedepunkten oberhalb 100 °C.

Als Aminoalkohole der allgemeinen Formel I eignen sich beispielsweise 2-Dimethylaminoethanol, 2-Diethylaminoethanol, 3-Dimethylamino-2,2-dimethyl-1-propanol, 4-(Dimethylamino)-1-butanol, 6-(Dimethylamino)-1-hexanol, 2-[2-(Dimethylamino)ethoxy]ethanol, 2-Dibutylaminoethanol, 3-Dimethylamino-1-propanol, 3-Diethylamino-1-propanol, 4-Dimethylaminophenol, 3-Diethylaminophenol, N-Hydroxyethyl-N-methylanilin,N-Hydroxyethyl-N-ethylanilin, N-n-Butyl-N-hydroxyethylanilin und/oder 4-(2-Hydroxyethyl)morpholin. Beispiele für Diamine der allgemeinen Formel II sind N,N-Dimethylaminopropylamin, N,N-Diethylaminopropylamin, N,N-Diethylaminoethylamin, 1-Diethylamino-4-aminopentan, N,N-Dimethyl-p-phenylendiamin, N,N-Diethyl-p-phenylendiamin und/oder 1-(3-Aminopropyl)imidazol.

Die Umsetzungen von carboxyl-, ester- und/oder anhydridgruppenhaltigen Polymeren mit Aminoalkoholen und/oder Diaminen, können in Gegenwart von Alkoholen der allgemeinen Formel III und/oder Aminen der allgemeinen Formel IV durchgeführt werden. Die Alkylgruppen, die in den Alkoholen und/oder Aminen enthalten sein können, können linear, verzweigtkettig und/oder cyclisch sein. Beispiele für Alkohole der allgemeinen Formel III sind Cyclohexanol, 2-Ethylhexanol, Octanol, Dodecanol, Tetradecanol, Hexadecanol, Octadecanol, Docosanol, Talgalkohol mit 12 Mol Ethylenoxid und/oder Benzylalkohol. Beispiele für Amine der allgemeinen Formel IV sind Hexylamin, 2-Ethylhexylamin, Octylamin, Decylamin, Dodecylamin, Tetradecylamin, Hexadecylamin, Octadecylamin, Docosylamin, Kokosamin und/oder Talgamin.

Druckfarben lassen sich besonders gut aus bedruckten Altpapieren und/oder Papierkreislaufwassern in Gegenwart von solchen mindestens teilweise wasserlöslichen Polymeren entfernen, die durch Umsetzung von Polymeren, bestehend aus Struktureinheiten der allgemeinen Formel A1, in der $R^1$ H, $R^2$ H oder eine Methylgruppe und $R^3$ H oder eine $C_{1-4}$-Alkylgruppe bedeuten mit Aminoalkoholen der allgemeinen Formel I und/oder Diaminen der allgemeinen Formel II, vorzugsweise mit Aminoalkoholen hergestellt werden.

Die erfindungsgemäß einzusetzenden mindestens teilweise wasserlöslichen Polymeren liegen vorzugsweise als wäßrige Lösungen oder wäßrige Dispersionen vor und besitzen Polymergehalte zwischen 1 und 20 Gew.-%, vorzugsweise zwischen 1 und 5 Gew.-%.

Die erfindungsgemäß einzusetzenden Polymeren werden Papierstoffsuspensionen vorzugsweise in Mengen von 0,02 bis 2 Gew.-%, besonders bevorzugt in Mengen von 0,1 bis 0,5 Gew.-%, jeweils bezogen auf lufttrockenen Papierstoff, zugesetzt. Lufttrockener Papierstoff bedeutet, daß sich im Papierstoff ein Gleichgewichtszustand an innerer Feuchte eingestellt hat. Dieser Gleichgewichtszustand hängt von der Temperatur und von der relativen Feuchte der Luft ab.

In vielen Fällen kann das Deinking-Ergebnis, das heißt die Entfernung von Druckfarben aus bedruckten Altpapieren gesteigert werden, wenn die erfindungsgemäß einzusetzenden Polymeren in Kombination mit beispielsweise $C_{10-22}$-Fettsäuren, wie Olinor$^R$4010, Olinor$^R$4020 und/oder Olinor$^R$DG40 (Hersteller aller Produkte Henkel KGaA), ethoxylierten Alkylalkoholen mit 6 bis 22 C-Atomen, ethoxylierten Alkylphenolen, Polymeren wie Polyacrylamiden und/oder Polydimethylaminoethylmethacrylaten und/oder Copolymeren, beschrieben beispielsweise in DE-A-38 39 479, in Mengen von 0,01 bis 1 Gew.-%, bezogen auf lufttrockenen Papierstoff, und/oder mit in situ gefällten Schichtverbindungen der allgemeinen Zusammensetzung

$M(II)_{1-x}M(III)_x(OH)_2(A^{z-})_{x/z} \cdot nH_2O$

in der M(II) für zweiwertige Metallkationen, M(III) für dreiwertige Metallkationen und $A^{z-}$ für Anionen ein- und/oder mehrbasischer Säuren stehen, die Indices x eine Zahl zwischen 0,01 und 0,5 und n eine Zahl zwischen 0 und 20 bedeuten, beschrieben in DE-A-39 09 568, eingesetzt werden. Das Molverhältnis zweiwertiger Metallkationen zu dreiwertigen Metallkationen liegt in in situ gefällten Schichtverbindungen vorzugsweise zwischen 20 : 1 und 1 : 1. Bezogen auf lufttrockenen Papierstoff können dreiwertige Metallkationen in Mengen zwischen 0,3 und 2 Gew.-% eingesetzt werden.

In Gegenwart von erfindungsgemäß verwendeten Polymeren lassen sich wasserverdünnbare und/oder lösungsmittelhaltige Druckfarben, vorzugsweise wasserverdünnbare Druckfarben alleine oder in Kombination mit lösungsmittelhaltigen Druckfarben, beispielsweise Zeitungsrotationsfarben, Buchdruckfarben, Off-Set-Druckfarben, Illustrationstiefdruckfarben, Flexodruckfarben, Laserdruckfarben und/oder Verpackungstiefdruckfarben aus bedruckten Altpapieren, beispielsweise Zeitungen, Illustrierten, Computerpapieren, Zeitschriften, Broschüren, Formularen, Telefonbüchern und/oder Katalogen entfernen. Die nach dem erfindungsgemäßen Verfahren deinkten Altpapiere zeichnen sich durch sehr hohe Weißgrade aus.

Bedruckte Altpapiere werden bei Stoffdichten beispielsweise zwischen 1 und 5 Gew.-% in einem Stofflöser in wäßriger Lösung, die typischerweise 0 bis 1,5 Gew.-% Wasserstoffperoxid (100 %ig), 0 bis 2,5 Gew.-% 99 Gew.-%ige NaOH und 0 bis 4,0 Gew.-% Natronwasserglas mit einem Feststoffgehalt von 35 Gew.-% (37 bis 40 °Be) - alle Gew.-% Angaben beziehen sich auf lufttrockenes Altpapier - enthält, bei Temperaturen zwischen 20 und 60 °C zerkleinert. Danach werden die Papierstoffsuspensionen in Wasser eingerührt oder mit Wasser versetzt, so daß 0,6 bis 1,6 gew.-%ige Papierstoffsuspensionen erhalten werden. Nach einer Verweilzeit zwischen 60 und 120 Minuten bei Temperaturen zwischen 20 und 60 °C werden, bezogen auf lufttrockenen Papierstoff, 0,02 bis 2 Gew.-% erfindungsgemäß einzusetzende Polymere zu den Papierstoffsuspensionen gegeben. Anschließend werden die abgelösten Druckfarbenteilchen in an sich bekannter Weise durch Auswaschen oder Flotation aus den Papierstoffsuspensionen ausgeschieden. Vorzugsweise wird in an sich bekannter Weise, beispielsweise in einer Denver-Flotationszelle flotiert.

Sofern eine oder mehrere der oben genannten Substanzen, beispielsweise Fettsäuren, ethoxylierte Alkylalkohole und/oder Alkylphenole, Polymere, Copolymere und/oder in situ gefällte Schichtverbindungen, eingesetzt werden, können diese vor oder während des Zerkleinerns des Papierstoffes oder zusammen mit den erfindungsgemäßen Verbindungen den Papierstoffsuspensionen zugesetzt werden.

Bei Einsatz der erfindungsgemäß zu verwendenden Verbindungen werden Druckfarben sowohl aus dem Altpapier als auch aus dem Kreislaufwasser entfernt. Die erfindungsgemäßen Verbindungen können auch zur separaten Reinigung von Papierkreislaufwässern eingesetzt werden. In diesen Fällen werden nach Zusatz von 2 bis 100 mg erfindungsgemäßer Verbindungen pro Liter Kreislaufwasser die Druckfarbenteilchen beispielsweise durch Filtration oder Flotation ausgeschieden.

## Beispiele

### Herstellung von Polymer I

In einen Reaktionskolben, der mit einem Rührer, einem Rückflußkühler sowie zwei Tropftrichtern versehen war, wurden 100 g Xylol gegeben und auf 100 °C erhitzt. Bei dieser Temperatur wurden innerhalb von 2 Stunden gleichzeitig 100 g Ethylacrylat aus dem einen Tropftrichter und 1 g Dibenzoylperoxid, gelöst in 20 g Xylol, aus dem anderen Tropftrichter getropft. Nach beendeter Monomerenzugabe wurde eine weitere Stunde bei 100 °C gerührt. Es entstand ein Polyethylacrylat mit einer spezifischen Viskosität bei 25 °C von = 1,40 (10 gew.-%ig in Toluol).

Anschließend wurden 117 g 2-Diethylaminoethanol und 6,6 g Natriummethylat zugesetzt und die Temperatur auf 130 bis 140 °C unter gleichzeitigem Abdestillieren von Ethanol erhöht. Nach dem Ende der Reaktion wurde Xylol im Vakuum destillativ entfernt und das erhaltene Polymer in essig-saurem Wasser gelöst. Es wurde eine Lösung mit einem Polymergehalt von 1 Gew.-% erhalten.

### Herstellung von Polymer II

Analog der Herstellung von Polymer I wurden 100 g Ethylacrylat in Gegenwart von 0,5 g Dibenzoylperoxid polymerisiert. Das erhaltene Polyethylacrylat besaß eine spezifische Viskosität bei 25 °C von $\eta$ = 1,69 (10 gew.-%ig in Toluol).

Die anschließende Umsetzung mit 2-Diethylaminoethanol sowie die Herstellung einer wäßrigen Lösung mit einem Polymergehalt von 1 Gew.-% erfolgte analog der Herstellung von erfindungsgemäßem Polymer I.

Herstellung von Polymer III

Analog der Herstellung von Polymer I wurden 100 g Ethylacrylat und 1 g Dibenzoylperoxid, gelöst in 20 g Xylol, bei 80 °C innerhalb von 2 Stunden zu 100 g Xylol gegeben. Nach beendeter Monomerenzugabe wurde eine weitere Stunde bei 90 °C gerührt. Das erhaltene Polyethylacrylat besaß eine spezifische Viskosität bei 25 °C von $\eta$ = 2,54 (10 gew.-%ig in Toluol).

Die anschließende Umsetzung mit 2-Diethylaminoethanol sowie die Herstellung einer wäßrigen Lösung mit einem Polymergehalt von 1 Gew.-% erfolgte analog der Herstellung von erfindungsgemäßem Polymer I.

Anwendungsbeispiele

20 g lufttrockenes (=18,4 g atro bei 8,3 % Feuchte; atro = absolut trocken) bedrucktes Altpapier (100 % Tageszeitungen), bedruckt mit Flexodruckfarben, wurden in 520 ml wäßriger Lösung, enthaltend 2,0 Gew.-% Natronwasserglas, Feststoffgehalt: 35 Gew.-% (37 -40 °Be), 2,33 Gew.-% Wasserstoffperoxid, 30 gew.-%ig und 1,0 Gew.-% Natriumhydroxid, 99 gew.-%ig (alle Gew.-%-Angaben beziehen sich auf lufttrokkenen Papierstoff) im Starmix, Stufe 2 bei 45 °C 10 Minuten zerkleinert. Anschließend wurde der Papierbrei auf 1,84 l mit Wasser verdünnt und 1,5 Stunden bei 45 °C stehengelassen. Anschließend wurden zu jeweils 600 ml dieser Papierstoffsuspension 0,2 Gew.-% erfindungsgemäß zu verwendende Polymere, bezogen auf lufttrockenen Papierstoff, unter Rühren gegeben und 12 Minuten bei 45 °C in einer Denver-Laborflotationszelle (600 ml) bei 300 Umdrehungen pro Minute flotiert. Nach der Flotation wurde der jeweilige Papierbrei auf einer Filternutsche vom Wasser (Kreislaufwasser) getrennt und zwischen 2 Filterpapieren auf einer Phototrockenpresse zu einem Blatt geformt und bei 100 °C 90 Minuten getrocknet.

Die Deinking-Ergebnisse sind in Tabelle 1 zusammengefaßt. Die Deinkbarkeitsmaßzahl (DEM) wurde aus den Reflektionsfaktoren $R_{457nm}$ (Weißgrad) der bedruckten (BS), deinkten (DS) und unbedruckten (US) Papierstoffe nach folgender Formel berechnet:

$$\text{DEM (\%)} = \frac{\text{Weißgrad (DS)} - \text{Weißgrad (BS)}}{\text{Weißgrad (US)} - \text{Weißgrad (BS)}} \times 100$$

(0 % bedeutet keine Druckfarbenentfernung, 100 % bedeutet quantitative Druckfarbenentfernung). Die Qualität des Kreislaufwassers wurde mit Hilfe einer Transmissionsmessung (Photometer 662, Firma Metrohm, Herisau, Schweiz) bestimmt (je höher die Transmission T in % ist, um so besser ist das Kreislaufwasser zu beurteilen: 100 % T bedeutet klares Kreislaufwasser).

Tabelle 1

| eingesetztes Polymer | $R_{457}$ (US) | $R_{457}$ (BS) | $R_{457}$ (DS) | DEM (%) | T (%) |
|---|---|---|---|---|---|
| 1 | 51,2 | 27,2 | 44,1 | 70 | 98 |
| 2 | 51,2 | 27,2 | 43,8 | 69 | 100 |
| 3 | 51,2 | 27,2 | 42,3 | 63 | 99 |

## Patentansprüche

1. Verwendung von mindestens teilweise wasserlöslichen Polymeren mit Gewichtsmitteln der Molekulargewichte zwischen 2 000 und 500 000, hergestellt durch Umsetzung von Polymeren, die Carboxylgruppen und/oder Estergruppen der allgemeinen Formel - COOR, in der R eine $C_{1-8}$-Alkylgruppe oder eine aromatische Gruppe bedeutet, und/oder -CO-O-CO-Gruppen enthalten,
   mit, bezogen auf die in den Polymeren enthaltenen Carboxyl-, Ester- und/oder latenten Carboxylgruppen,

B1. 0 bis 1 Äquivalent Aminoalkoholen der allgemeinen Formel I

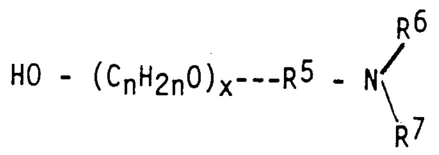

in der $R^5$ eine $C_{1-8}$-Alkylgruppe oder eine aromatische Gruppe, $R^6$ und $R^7$ gleich oder verschieden sind und $C_{1-4}$-Alkylgruppen oder aromatische Gruppen oder $R^6$ und $R^7$ zusammen $CH_2CH_2$-O-$CH_2CH_2$, n 2, 3 und/oder 4 und x eine Zahl zwischen 0 und 10 bedeuten,
B2. 0 bis 1 Äquivalent Diaminen der allgemeinen Formel II

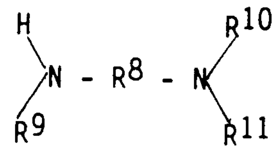

in der $R^8$ eine $C_{1-8}$-Alkylgruppe oder eine aromatische Gruppe, $R^9$ H oder eine $C_{1-4}$-Alkylgruppe und $R^{10}$ und $R^{11}$ gleich oder verschieden sind und $C_{1-4}$-Alkylgruppen oder $R^{10}$ und $R^{11}$ zusammen -CH=CH-N=CH- bedeuten,
B3. 0 bis 0,5 Äquivalenten Alkoholen der allgemeinen Formel III

HO - $(C_mH_{2m}O)_y$—$R^{12}$

in der $R^{12}$ eine $C_{6-22}$-Alkylgruppe oder eine aromatische Gruppe, m 2, 3 und/oder 4 und y eine Zahl zwischen 0 und 30 bedeuten und
B4. 0 bis 0,5 Äquivalenten Aminen der allgemeinen Formel IV

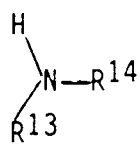

in der $R^{13}$ H oder eine $C_{1-4}$-Alkylgruppe und $R^{14}$ eine $C_{6-22}$-Alkylgruppe oder eine aromatische Gruppe bedeuten,
mit der Maßgabe, daß die Summe der Äquivalente der Komponenten B1 und B2 ungleich 0 ist,
zum Entfernen von Druckfarben aus bedruckten Altpapieren und/oder Papierkreislaufwässern.

**2.** Verwendung nach Anspruch 1, dadurch gekennzeichnet, daß mindestens teilweise wasserlösliche Polymere mit Gewichtsmitteln der Molekulargewichte zwischen 5 000 und 300 000, vorzugsweise zwischen 10 000 und 100 000 verwendet werden.

**3.** Verwendung nach einem oder beiden der Ansprüche 1 bis 2, dadurch gekennzeichnet, daß mindestens teilweise wasserlösliche Polymere, hergestellt durch
Umsetzung von carboxyl-, ester- und/oder anhydridgruppenhaltigen Polymeren mit, bezogen auf die in den Polymeren enthaltenen Carboxyl-, Ester- und/oder latenten Carboxylgruppen,
B1. 0 bis 1 Äquivalent Aminoalkoholen,
B2. 0 bis 1 Äquivalent Diaminen,
B3. 0 bis 0,2 Äquivalenten Alkoholen und
B4. 0 bis 0,2 Äquivalenten Aminen,
mit der Maßgabe, daß die Summe der Äquivalente der Komponenten B1 und B2 zwischen 0,7 und 1

liegt, verwendet werden.

4. Verwendung nach einem oder mehreren der Ansprüche 1 bis 3, dadurch gekennzeichnet, daß carboxyl-, ester- und/oder anhydridgruppenhaltige Polymere Struktureinheiten der allgemeinen Formeln

A1.

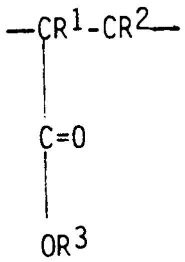

und/oder

A2.

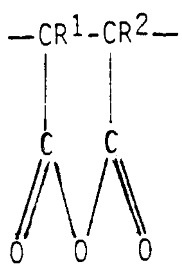

und/oder

A3.

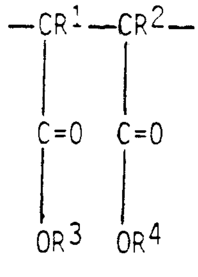

in denen $R^1$ und $R^2$ gleich oder verschieden sind und jeweils H oder eine Methylgruppe und $R^3$ und $R^4$ gleich oder verschieden sind und jeweils H, eine $C_{1-8}$-Alkylgruppe oder eine aromatische Gruppe bedeuten, enthalten.

5. Verwendung nach einem oder mehreren der Ansprüche 1 bis 4, dadurch gekennzeichent, daß carboxyl-, ester- und/oder anhydridgruppenhaltige Polymere Struktureinheiten der allgemeinen Formel A1 enthalten.

6. Verwendung nach einem oder mehreren der Ansprüche 1 bis 5, dadurch gekennzeichnet, daß mindestens teilweise wasserlösliche Polymere, hergestellt durch Umsetzungen von Polymeren, bestehend aus Struktureinheiten der allgemeinen Formel A1, in der $R^1$ H, $R^2$ H oder eine Methylgruppe und

$R^3$ H oder eine $C_{1-4}$-Alkylgruppe bedeuten, mit Aminoalkoholen und/oder Diaminen, vorzugsweise mit Aminoalkoholen, verwendet werden.

## Claims

**1.** The use of at least partly water-soluble polymers having weight average molecular weights of 2,000 to 500,000, prepared by reaction of polymers containing carboxyl groups and/or ester groups corresponding to the general formula -COOR, in which R is a $C_{1-8}$ alkyl group or an aromatic group, and/or -CO-O-CO- groups
with - based on the carboxyl, ester and/or latent carboxyl groups present in the polymers -
B1. 0 to 1 equivalent amino alcohols corresponding to general formula I

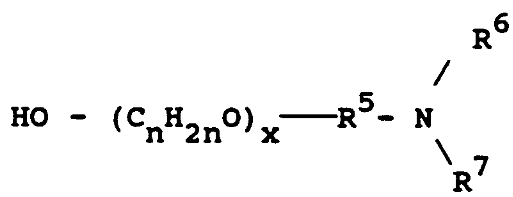

in which $R^5$ is a $C_{1-8}$ alkyl group or an aromatic group, $R^6$ and $R^7$ are the same or different and represent $C_{1-4}$ alkyl groups or aromatic groups or $R^6$ and $R^7$ together represent $CH_2CH_2$-O-$CH_2CH_2$, n = 2, 3 and/or 4 and x is a number of 0 to 10,
B2. 0 to 1 equivalent diamines corresponding to general formula II

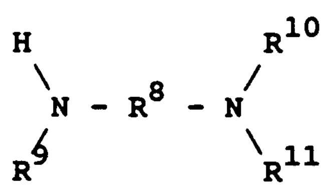

in which $R^8$ is a $C_{1-8}$ alkyl group or an aromatic group, $R^9$ is H or a $C_{1-4}$ alkyl group and $R^{10}$ and $R^{11}$ may be the same or different and represent $C_{1-4}$ alkyl groups or $R^{10}$ and $R^{11}$ together represent -CH=CH-N=CH-,
B3. 0 to 0.5 equivalent alcohols corresponding to general formula III

$HO - (C_mH_{2m}O)_y — R^{12}$

in which $R^{12}$ is a $C_{6-22}$ alkyl group or an aromatic group, m = 2, 3 and/or 4 and y is a number of 0 to 30, and
B4. 0 to 0.5 equivalent amines corresponding to general formula IV

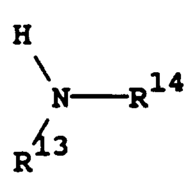

in which $R^{13}$ is H or a $C_{1-4}$ alkyl group and $R^{14}$ is a $C_{6-22}$ alkyl group or an aromatic group,
with the proviso that the sum of the equivalents of components B1 and B2 is not 0,
for the removal of printing inks from printed waste paper and/or paper circuit waters.

2. The use claimed in claim 1, characterized in that at least partly water-soluble polymers having weight average molecular weights of 5,000 to 300,000 and preferably 10,000 to 100,000 are used.

3. The use claimed in one or both of claims 1 and 2, characterized in that at least partly water-soluble polymers prepared by reaction of polymers containing carboxyl, ester and/or anhydride groups with - based on the carboxyl, ester and/or latent carboxyl groups in the polymers -
 B1. 0 to 1 equivalent amino alcohols,
 B2. 0 to 1 equivalent diamines,
 B3. 0 to 0.2 equivalent alcohols and
 B4. 0 to 0.2 equivalent amines,
 with the proviso that the sum of the equivalents of components B1 and B2 is from 0.7 to 1, are used.

4. The use claimed in one or more of claims 1 to 3, characterized in that polymers containing carboxyl, ester and/or anhydride groups contain structural units corresponding to the following general formulae
 A1.

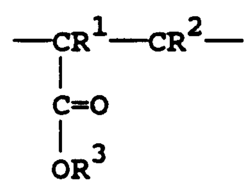

and/or
A2.

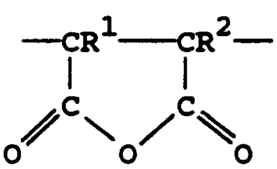

and/or
A3.

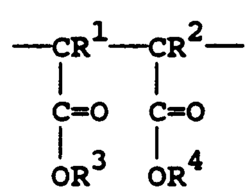

in which $R^1$ and $R^2$ may be the same or different and represent H or a methyl group and $R^3$ and $R^4$ may be the same or different and represent H, a $C_{1-8}$ alkyl group or an aromatic group.

5. The use claimed in one or more of claims 1 to 4, characterized in that polymers containing carboxyl, ester and/or anhydride groups contain structural units corresponding to general formula A1.

6. The use claimed in one or more of claims 1 to 5, characterized in that at least partly water-soluble polymers prepared by reaction of polymers consisting of structural units corresponding to general formula A1, in which $R^1$ is H, $R^2$ is H or a methyl group and $R^3$ is H or a $C_{1-4}$ alkyl group, with amino

alcohols and/or diamines, preferably with amino alcohols, are used.

**Revendications**

1. Utilisation de polymères au moins partiellement solubles dans l'eau ayant des moyennes de poids moléculaires comprises entre 2 000 et 500 000, produits par réaction de polymères qui renferment des groupes carboxyle, et/ou des groupes ester de formule générale COOR, dans laquelle R signifie un radical alcoyle en $C_1$ à $C_8$ ou un groupe aromatique et/ou des groupes CO-O-CO, avec, rapporté aux groupes carboxyle, ester et/ou aux groupes carboxyle latents contenus dans les polymères:

   B1. de 0 à 1 équivalent d'amino-alcools de formule générale I

   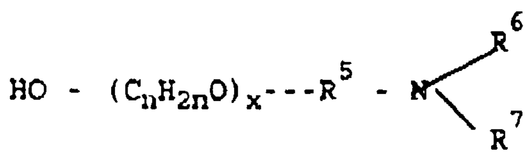

   dans laquelle $R^5$ est un radical alcoyle en $C_1$ à $C_8$ ou un groupe aromatique, $R^6$ et $R^7$ sont identiques ou différents, et signifient des radicaux alcoyle en $C_1$ à $C_4$ ou des groupes aromatiques ou bien $R^6$ et $R^7$ ensemble signifient $CH_2CH_2$—O-$CH_2CH_2$, n est égal 2,3 et/ou 4 et x est un nombre entre 0 et 10.

   B2. de 0 à 1 équivalent de diamines de formule générale II

   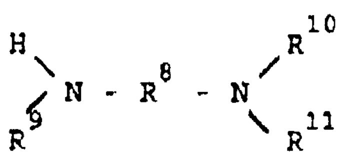

   dans laquelle $R^8$ signifie un radical alcoyle en $C_1$ à $C_8$ ou un groupe aromatique, $R^9$ signifie un H ou un radical alcoyle en $C_1$ à $C_4$ et $R^{10}$ et $R^{11}$ sont identiques ou différents et signifient des radicaux alcoyle en $C_1$ à $C_4$ ou bien $R^{10}$ et $R^{11}$ ensemble signifient -CH = CH-N = CH-.

   B3.de 0 à 0,5 équivalent d'alcools de formule générale III

   HO - $(C_mH_{2m}O)_y$—$R^{12}$

   dans laquelle $R^{12}$ signifie un radical alcoyle en $C_6$ à $C_{22}$ ou un groupe aromatique m est égal à 2,3 et/ou 4 et y est un nombre entre 0 et 30 et,

   B4.de 0 à 0,5 équivalent d'amines de formule générale IV

   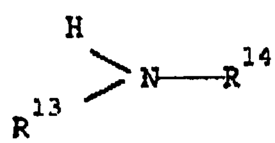

   dans laquelle $R^{13}$ signifie H ou un radical alcoyle en $C_1$ à $C_4$ et $R^{14}$ un radical alcoyle en $C_6$ à $c_{22}$ ou un groupe aromatique

   - avec la restriction que la somme des équivalents des composants B1 et B2 est différente de 0, pour l'élimination des encres d'impression des vieux papiers imprimés et/ou des eaux de recyclage du papier.

2. Utilisation selon la revendication 1, caractérisée en ce que des polymères au moins partiellement solubles dans l'eau ayant des moyennes de poids moléculaires comprises entre 5 000 et 300 000, de

préférence entre 10 000 et 100 000, sont utilisés.

**3.** Utilisation selon l'une ou les deux revendications 1 à 2, caractérisée en ce l'on utilise des polymères au moins partiellement solubles dans l'eau, produits par réaction de polymères porteurs de groupes carboxyle, ester et/ou anhydride avec, rapportés aux groupes carboxyle, ester et/ou carboxyle latents contenus dans les polymères,

B1.de 0 à 1 équivalent d'amino-alcools
B2.de 0 à 1 équivalent de diamines
B3.de 0 à 0,2 équivalent d'alcools et
B4.de 0 à 0,2 équivalents d'amines.

avec la restriction que la somme des équivalents des composants B1 et B2 se situe entre 0,7 et 1.

**4.** Utilisation selon l'une ou plusieurs des revendications 1 à 3, caractérisée en ce que les polymères porteurs de groupes carboxyle, ester et/ou anhydride, contiennent des motifs structurels de formule générale:

A1

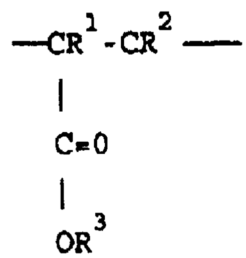

et/ou
A2

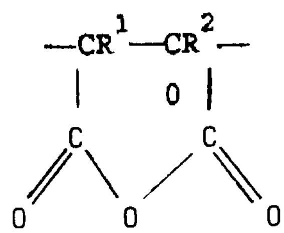

et/ou
A3

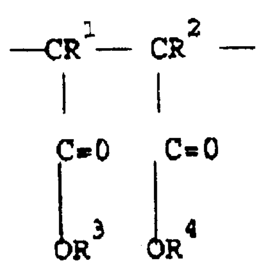

dans lesquels $R^1$ et $R^2$ sont identiques ou différents et signifient respectivement H ou un radical méthyle.
et $R^3$ et $R^4$ sont identiques ou différents et signifient respectivement H, des radicaux alcoyle en $C_1$ à

$C_8$ ou un groupe aromatique

**5.** Utilisation selon l'une ou plusieurs des revendications 1 à 4, caractérisée en ce que des polymères porteurs de groupes carboxyle, ester et/ou anhydride, renferment des motifs structurels de formule général A1.

**6.** Utilisation selon l'une ou plusieurs des revendications 1 à 5, caractérisée en ce que l'on utilise des polymères au moins partiellement solubles dans l'eau, produits par réactions de polymères formés de motifs structurels de formule générale A1, dans laquelle $R^1$ est un H, $R^2$ est un H ou un radical méthyle et $R^3$ est un H ou un radical alcoyle en $C_1$ à $C_4$ avec des amino-alcools et/ou des diamines, de préférence des amino-alcools.